Europäisches Patentamt

(19) European Patent Office

Office européen des brevets

(11) Numéro de publication: **0 042 804**
**B1**

(12) **FASCICULE DE BREVET EUROPEEN**

(45) Date de publication du fascicule du brevet:
09.04.86

(21) Numéro de dépôt: **81401013.8**

(22) Date de dépôt: **23.06.81**

(51) Int. Cl.⁴: **C 08 J 5/22, C 25 B 13/08**

(54) Membrane échangeuse de cations, son procédé de fabrication et son application en tant qu'électrolyte solide.

(30) Priorité: **24.06.80 FR 8013939**

(43) Date de publication de la demande:
**30.12.81 Bulletin 81/52**

(45) Mention de la délivrance du brevet:
**09.04.86 Bulletin 86/15**

(84) Etats contractants désignés:
**BE CH DE GB IT LI NL SE**

(56) Documents cités:
**FR - A - 2 121 077**
**FR - A - 2 257 617**
**GB - A - 1 199 952**
**US - A - 3 304 272**

(73) Titulaire: **COMMISSARIAT A L'ENERGIE ATOMIQUE**
**Etablissement de Caractère Scientifique Technique et**
**Industriel, B.P. 510, F-75752 Paris Cedex 15 (FR)**

(72) Inventeur: **Gaussens, Gilbert, 11, rue Jean Brunet,**
**F-92190 Meudon (FR)**
Inventeur: **Lemaire, Francis, 82, rue Pierre Brossolette,**
**F-92320 Chatillon sous Bagneux (FR)**

(74) Mandataire: **Mongrédien, André et al, c/o**
**BREVATOME 25, rue de Ponthieu, F-75008 Paris (FR)**

LIBER, STOCKHOLM 1986

## Description

L'invention a pour objet un procédé de fabrication d'une membrane échangeuse de cations comportant des groupes échangeurs de cations, et la membrane obtenue par ce procédé.

Elle concerne également l'application de cette membrane en tant qu'électrolyte solide pour la production d'hydrogène par électrolyse de l'eau.

Dans cette application, l'électrolyse est réalisée à l'intérieur de la membrane qui est gonflée d'eau et qui assure l'étanchéité entre les compartiments anodique et cathodique dans lesquels sont dégagés respectivement l'oxygène et l'hydrogène.

Dans la technique, on parle de procédés au "S P E" ou "solid Polymer Electrolyte".

L'anode et la cathode peuvent être formées par dépôt sur chacune des deux faces de la membrane d'une couche conductrice du courant électrique, les deux couches formant électrodes étant reliées aux bornes d'une source de courant électrique.

Une différence de potentiel étant appliquée aux électrodes, il se produit:
- au contact de l'anode, la décomposition de l'eau selon le schéma:

$$2 H_2O \rightarrow 4H^+ + 4e^- + O_2$$

- au contact de la cathode, le dégagement de l'hydrogène selon le schéma:

$$4H^+ + 4e^- \rightarrow 2H_2$$

Parmi les procédés connus actuellement pour la préparation de membranes échangeuses de cations le brevet GB-A- 1 199 952 décrit un procédé qui consiste à greffer des monomères éthyleniquement insaturés sur une poudre de polymère, à mettre la poudre greffée ainsi obtenue sous la forme d'une membrane par pressage à chaud et à fixer des groupes échangeurs de cations sur la membrane ainsi obtenue.

On connaît d'autres procédés de fabrication de membranes echangeuses d'ions. Ainsi, le brevet français FR-A- 2 121 077 illustre un procédé qui consiste à former la membrane à partir d'un premier monomère constitué par un dérivé vinylique du benzène, par exemple le styrène, d'un second monomère constitué par un composé divinylique non conjugué tel que le divinylbenzène et d'un polymère thermoplastique gonflable ou soluble dans le mélange des deux monomères, en polymérisant le mélange de monomères sous forme de pellicule et en introduisant ensuite des groupes échangeurs d'anions dans le produit polymérisé obtenu.

On peut préparer la pellicule à partir de la poudre de polymère thermoplastique gonflé par le mélange de monomères, par irradiation par la lumière ou au moyen de rayonnements ionisants.

Cependant, ces membranes échangeuses ne possèdent pas simultanément:
- une capacité d'echangé suffisamment forté,
- une résistance électrique suffisamment faible,
- un gonflement dans l'eau suffisamment important et
- une perméabilité aux gaz ét notamment vis-à-vis de H_2 et de O_2 suffisamment faiblé pour répondre aux exigences de la pratique. De plus, leur inertie chimique n'est pas toujours satisfaisante.

L'invention a précisément pour objet un procédé de fabrication d'une membrane échangeuse de cations qui permet l'obtention de membranes présentant les caractéristiques précitées.

Ce procédé se caractérisé par le fait que:
- dans une première étape, on prépare une poudre de copolymère greffé en greffant des monomères éthylèniquement insaturés sur une poudre de polymère de façon à obtenir un taux de greffage des monomères sur le polymère de 15 à 60 %;
- dans une deuxième étape, on met la poudre de copolymère greffé sous la forme d'une pellicule mince en mettant en solution dans un solvant organique la poudre de copolymère greffé, en coulant sur un support la solution ainsi obtenue et en évaporant ensuite le solvant; et
- dans une troisième étape, on fixe des groupes échangeurs de cations sur la pellicule de copolymère greffé ainsi obtenue.

Dans la première étape du procédé, on peut préparer la poudre de copolymère greffé en mettant en contact la poudre de polymère avec une solution des monomères éthyléniquement insaturés, et en provoquant la polymérisation de ces monomères par un mécanisme de formation de radicaux libres.

De préférence, on réalise cette étape en soumettant à une irradiation au moyen de rayonnements ionisants une suspension de ladite poudre de polymère dans une solution desdits monomères.

Les rayonnements ionisants susceptibles d'être utilisés sont les rayonnements ultraviolets, les rayons X, les rayonnements $\alpha$, $\beta$ ou $\gamma$, et les faisceaux d'électrons accélérés.

Pour la réalisation de cette première étape, on utilise avantaqeusement une poudre de polymère ayant une granulometrie inférieure à 100 μm, de preférence comprise entre 5 et 50 μm, et plus preferentiellement encore comprise entre 10 et 20 μm.

Selon un mode de réalisation avantageux du procédé de l'invention, la poudre de polymère est une poudre de polyéthylène et les monomeres sont choisis dans le groupe comprenant le styrene et/ou un ou plusieurs de ses dérivés tels que l'$\alpha$-méthylstyrène, 1,$\alpha$-bromostyrène, l'$\alpha$-chlorostyrene, le chlorométhylstyrène, le bromométhylstyréne et le divinylbenzene.

Dans ce cas, on réalise avantageusement le greffage sous rayonnement ionisant en utilisant une dose d'irradiation de 1000 à 5000 Gy.

Dans la deuxième étape du procédé de l'invention, on neut renforcer la pellicule mince de copolymère greffé en incluant une trame dans cette pellicule mince, par exemple en coulant la solution sur un support sur lequel est disposée une trame de renforcement ou en pressant à chaud la pellicule mince contre une trame de renforcement, ce qui permet d'améliorer les propriétés mécaniques de la membrane obtenue.

Dans la troisième étape du procédé de l'invention, on fixe avantageusement des groupes -SO₃H échangeurs de cations sur la pellicule de copolymère greffé obtenue en immergeant cette pellicule dans un bain d'acide chlorosulfonique, d'acide sulfurique concentré ou d'oléum.

L'invention a également pour objet la membrane échangeuse de cations obtenue par le procédé précité.

Cette membrane échangeuse de cations comprend une pellicule de copolymère greffé sur lequel sont fixés des groupes échangeurs de cations, et elle se caractérisé par le fait que:
- sa capacité d'échange est supérieure à 0,5 milliéquivalent par gramme (meq/g), de préférence supérieur à 1,75 meq/g,
- sa résistivité est inférieure à 100 Ω.cm, de préférence inférieure à 70 Ω.cm, et
- son gonflement dans l'eau est supérieur à 30 % de préférence supérieur à 60 % par rapport à la masse sèche.

On précise que la capacité d'échange de la membrane correspond au nombre de groupes échangeurs de cations par unité de poids de la pellicule de copolymère greffé.

De préférence, selon l'invention, la membrane presente les caractéristiques suivantes:
- sa capacité d'échange est comprise entre 1,75 et 4 meq/g,
- sa résistivité est comprise entre 70 ét 20 Ω.cm, et
- son gonflement dans l'eau est compris entre 60 et 100 % par rapport à la masse sèche.

Avantageusement son épaisseur est comprise entre 30 et 150 μm.

Selon l'invention, la pellicule est de préférence réalisée en un copolymère greffé comprenant:
- de 13 à 37,5 % en poids de motifs provenant d'un ou plusieurs monomères choisis dans le groupe comprenant le styrène et l'un de ses dérivés tels que l'α-mèthyl-styrène, 1'α-bromostyrène, l'α-chlorostyrène, le chlorométhylstyrène, le bromométhylstyrène et le divinylbenzène; et
- de 62,5 à 87 % en poids d'un polymère tel que le polyéthylène, le polypropylène, le polybutadiène ou une autre polyoléfine.

De préférence, selon l'invention, le copolymère greffé est du polyéthylène greffé par du styrène et/ou l'un ou plusieurs de ses dérivés, le copolymère comprenant de 13 à 37,5 % en poids de motifs provenant du styrène et/ou de ses dérivés.

Grâce à l'utilisation des copolymères précités, la membrane selon l'invention présente une bonne inertie chimique qui lui permet en particulier de résister à l'attaque de l'oxygène, de l'hydrogène, et des solutions d'électrolyte et des acide; forts utilisés habituellement pour le rinçage des modules de cellules de production d'hydrogène par électrolyse de l'eau.

De ce fait, elle peut être utilisée avantageusement en tant qu'électrolyte solide pour la production d'hydrogène ayant une pureté supérieure à 98 % par électrolyse de l'eau.

D'autres caractéristiques de l'invention apparaîtront mieux à la lecture de la description qui suit et des exemples donnés bien entendu à titre illustratif et non limitatif.

Se proposant par conséquent de réaliser une membrane échangeuse de cations conforme à l'invention, on s'y prend comme suit ou de façon équivalente.

On prépare une solution de monomères, par exemple de styrène ou de l'un ou plusieurs de ses dérivés dans un solvant alcoolique tel que l'éthanol et le méthanol.

La teneur de la solution en styrène et/ou en ses dérivés est avantageusement de 5 à 30 % en poids.

Dans cette solution, on met en suspension une poudre fine de polymère, par exemple, de polyéthylène de basse ou de haute densité. La granulométrie de cette poudre est inférieure à 100 μm, de préférence comprise entre 5 μm et 50 μm, et plus préférentiellement encore entre 10 et 20 μm. Cette poudre de polyéthylène se trouve dans le commerce et est préparée par des procédés connus en soi.

La quantité de poudre de polyéthylène par unité de volume de la susdite solution est de 5 % à 30 %.

La suspension est disposée à la température ambiante, notamment de 18 à 23°C, à l'intérieur d'un récipient hermètique relié à une source de vide. On établit avantageusement un vide de 1,35 à 0,135 Pa 10⁻² à 10⁻³Torr).

Tout en maintenant la susdite température, on soumet la suspension de polyéthylène dans la solution de styrène à un rayonnement γ suffisant pour réaliser un taux de greffage du styrène sur le polyéthylène de 15 à 60 %.

Dans la pratique, on réalise l'irradiation au moyen d'une source γ au cobalt 60 et on s'arrange pour que la dose d'irradiation soit de 1000 à 5000 Gy.

La durée de l'irradiation est comprise entre 30 minutes et 4 heures.

Une fois l'irradiation terminée, au taux de greffage désiré, on retire la suspension de copolymère greffé de l'enceinte. On décante, on lave à l'éthanol jusqu'à ce que les traces de monomère résiduel soient éliminées, puis on sèche jusqu'à l'obtention d'un poids constant en étuve à 60°C.

L'augmentation de poids de la poudre de polyéthylène traduit le taux de greffage.

Toujours à la température ambiante, on dissout la poudre de copolymère greffé dans un solvant choisi parmi la décaline ou ses dérivés, les xylènes et les chloronaphtalènes, la dissolution étant effectuée à raison de 20 g à 150 g de poudre par litre de solvant.

On réalise ainsi la répartition la plus homogene possible du copolymère qui est ensuite mis sous forme de pellicule.

Pour ce faire, on coule la solution sur un support plan non adhésif, par exemple en polytétrafluoroéthylène ou en fluorure de polyvinylidène de façon à réaliser une couche liquide.

L'épaisseur de cette couche est fonction de l'épaisseur désirée de la pellicule, elle-méme fonction du taux de greffage.

On évapore le solvant en portant la température de la solution à environ 70 à 100°C.

En général, l'épaisseur de la pellicule terminée constituant la membrane est de 30 à 150 μm.

Il est avantageux de renforcer les propriétés mécaniques de la pellicule par inclusion d'une trame, notamment d'une trame tissée constituée par exemple de multifilaments de fibres de verre, ou de monobrins de polypropylène. De telles trames, qui se trouvent dans le commerce, peuvent être fabriquées selon des procédés en soi connus.

Pour inclure la trame dans la masse de la pellicule, on peut couler la solution de copolymère greffé sur la trame posée sur le support; on peut également presser à chaud la pellicule formée contre la trame. Dans ce dernier cas, la pression exercée est généralement de 10 kPa à 2 MPa (0,1 à 20 kg/cm²) et la température de 100 à 160°C.

L'immersion subséquente dans l'acide chlorosulfonique pur des pellicules susdites pour la fixation des groupes échangeurs -SO₃H se fait à la température ambiante pendant un temps compris entre 30 et 120 minutes choisi en fonction du taux de greffagwe et de l'épaisseur de la pellicule.

On procède ensuite à un lavage de la pellicule en ayant recours par exemple à de l'acide acétique et on poursuit ce lavage jusqu'à atteindre l'élimination totale de l'acide chlorosulfonique résiduel puis on rince à l'eau permutée jusqu'à ce que l'eau de lavage soit à pH 7.

Le rendement du traitement de sulfonation est de 90 à 100 %.

L'utilisation du polymère de base sous forme de poudre ultrafine permet d'obtenir une excellente homogénéité de greffage dans le copolymère formé. La dissolution de la poudre du copolymère greffé permet d'obtenir une excellente homogénéité de répartition des greffons de polystyrène dans la masse du copolymère.

Cette parfaite homogénéité du copolymère se concrétise, sur la membrane échangeuse de cations finale, par une très faible résistivité, ce grâce à quoi la consommation d'énergie électrique due à l'effet Joule dans la membrane lors de l'électrolyse de l'eau est très faible.

La capacité d'échanges de la membrane conforme à l'invention, c'est-à-dire le nombre de groupes échangeables par unité de poids ou de volume, qui est fonction du taux de greffage, est supérieure à 0,5 meq/g et comprise de préférence entre 1,75 et 4 meq/g, ce qui confère à la membrane une excellente conductivité.

La résistivité de la membrane est faible: elle est inférieure à 100, de préférence comprise entre 70 et 20 Ω.cm, ce qui permet de n'avoir qu'une faible consommation d'énergie électrique par effet Joule dans la membrane. Grâce à cela, l'élévation de la température dans la membrane est faible, d'où une augmentation de sa durée de vie.

Le gonflement dans l'eau, de la membrane est élevée; il est compris entre 30 et 100 % par rapport à la masse sèche de la membrane, ce qui permet un bon renouvellement de l'eau, consommée par électrolyse, à l'intérieur de la membrane, de préférence le gonflement est de 60 à 100 %.

Sa perméabilité aux gaz et principalement à l'hydrogène et à l'oxygène est faible. Cela permet, au cours de l'électrolyse, d'obtenir des gaz de bonne pureté, supérieure à 98-99 %, la membrane assurant l'étanchéité entre le compartiment où se forme l'hydrogène et celui où se forme l'oxygène.

Enfin, la pellicule constituant la membrane conforme à l'invention a une bonne inertie chimique et d'excellentes propriétés mécaniques lorsqu'elle est renforcée par une trame, ce qui rend possible son utilisation dans la fabrication de $H_2$ par électrolyse de l'eau sous une différence de pression importante entre les deux compartiments du module d'électrolyse.

Les exemples qui suivent sont relatifs à des modes de réalisation avantageux de l'invention.

**EXEMPLE 1**

Une quantité de 150 g de poudre de granulométrie comprise entre 10 et 20 μm de polyéthylène basse densité, suspendue dans 750 ml d'une solution contenant, en volume, 20% de styrène et 80% d'éthanol, est soumise, sous vide et à la température ambiante, à un rayonnement γ du cobalt 60. La dose délivrée est de 3000 Gy. Après lavage à l'éthanol et séchage à poids constant, le taux de greffage mesuré est de 40 %.

Le copolymère formé est dissous, à température ambiante, dans de la décaline à une concentration de 80 g/l, puis est coulé sur une plaque préchauffée à 80°C et revêtue de polytétrafluoroéthylène. La coulée est réalisée en deux applications successives et, après évaporation totale du solvant, la pellicule ainsi réalisée a une épaisseur de 100 μm.

Cette pellicule de copolymère est alors plongée pendant 75 minutes, à la température ambiante, dans de l'acide chlorosulfonique pur, puis rincée deux fois par de l'acide acétique et deux fois par de l'eau, le deuxième rinçage s'effectuant en circulation continue d'eau jusqu'à ce que le pH de la solution de rinçage soit neutre. Le rendement de sulfonation mesuré est de 95 %.

La membrane ainsi produite a une capacité d'echange de 3,1 meq/g, une résistivité de 46 Ω.cm, une teneur en eau de 85 % et une faible perméabilité à l'oxygène et à l'hydrogène.

Lors de sa mise en oeuvre dans un module d'électrolyse, les électrodes étant en platine, sous un courant de 2000 A/m$^2$, les gaz produits contiennent moins de 0,5 % d'impuretés. Après 1500 heures d'utilisation, son fonctionnement n'est pas altéré.

## EXEMPLE 2

La technique d'obtention du copolymère greffé est celle décrite dans l'exemple 1. La dose d'irradiation délivrée étant de 1800 Gy, le taux de greffage mesuré est alors de 24 %.

Les modalités de mise sous forme de pellicule et celles de la sulfonation (traitement par l'acide chlorosulfonique) sont identiques à celles décrites dans l'exemple 1.

La pellicule obtenue a une épaisseur de 100 μm et le rendement de sulfonation est de 93 %.

La membrane ainsi réalisée a une capacité d'échange de 1,85 meq/g, une résistivité de 64 Ω.cm, une teneur en eau de 66 % et une faible perméabilité à l'oxygène et à l'hydrogène.

## EXEMPLE 3

La préparation du copolymère greffé et la technique de mise sous forme du film sont celles décrites dans l'exemple 1.

La pellicule de copolymère (taux de greffage 40 %), d'une épaisseur de 100 μm, ainsi produite est alors pressée à chaud sur une trame tissée de multifilaments continus en fibres de verre, sous une pression de 0,5 MPa (5 kg/cm$^2$) et à une température de 125°C.

Cette pellicule renforcée est alors sulfonée par l'acide chlorosulfonique selon la technique décrite dans l'exemple 1, le temps de sulfonation est de 90 minutes et le rendement de sulfonation mesuré est de 94 %.

La membrane ainsi produite a des propriétés mécaniques nettement améliorées par rapport aux membranes des exemples 1 et 2, une capacité d'échange de 3,2 meq/g, une résistivité de 56 Ω.cm, une teneur en eau de 98 % et une faible perméabilité à l'hydrogène et à l'oxygène.

Lors de son emploi dans un module d'électrolyse, les électrodes étant en platine, sous un courant de 2000 A/m$^2$, les gaz produits contiennent moins de 1,5 % d'impuretés.

## EXEMPLE 4

La préparation du copolymère greffé est celle décrite dans l'exemple 1; le taux de greffage est de 40 %.

La pellicule est réalisée par trois coulées successives d'une solution de copolymère à 80 g/l dans de la décaline sur une trame tissée en fibres de verre identique à celle décrite dans l'exemple 3. Les technologies de dissolution, de coulée et de séchage sont celles décrites dans l'exemple 1.

Le traitement par l'acide chlorosulfonique est celui décrit dans l'exemple 1. Le temps de réaction étant de 105 minutes, le rendement de sulfonation mesuré est de 96 %.

La membrane ainsi produite a des propriétés mécaniques nettement améliorées par rapport à la membrane de l'exemple 1, une capacité d'échange de 3,3 meq/g, une résistivité de 49 Ω.cm et une teneur en eau de 92 %.

## EXEMPLE 5

La préparation du copolymère greffé est celle décrite dans l'exemple 1, le taux de greffage est de 40 %.

Ce copolymère formé est dissous, à température ambiante, dans de la décaline à une concentration de 120 g/l, puis est coulé sur une plaque, préchauffée à 85°C et revêtue de fluorure de polyvinylidène. La coulée est réalisée en deux applications successives et, après évaporation totale du solvant, la pellicule ainsi réalisée a une épaisseur de 120 μm. Cette pellicule est alors pressée à chaud sur une trame tissée, de monobrins de polypropylène, sous une pression de 0,5 MPa (5 kg/cm$^2$) et à une température de 123°C.

Cette pellicule renforcée est alors sulfonée par l'acide chlorosulfonique selon la technique décrite dans l'exemple 1.

Le temps de réaction est de 90 minutes et le rendement de sulfonation est de 95 %.

La membrane ainsi produite a des propriétés mécaniques nettement améliorées par rapport à la membrane de l'exemple 1, une capacité d'échange de 3,1 meq/g, une résistivité de 41 Ω.cm, une teneur en eau de 89 % et une faible perméabilité aux gaz et en particulier à l'hydrogène et à l'oxygène.

Lors de son emploi dans un module d'électrolyse, les électrodes étant en platine, sous un courant de 2000 A/m$^2$, les gaz produits contiennent moins de 1 % d'impuretés.

Après 1500 heures d'utilisation, son fonctionnement est inaltéré.

## EXEMPLE 6

La préparation du copolymère greffé est celle décrite dans l'exemple 1, le taux de greffage étant de 40 %.

La technique de mise sous forme de pellicule est celle décrite dans l'exemple 1.

La concentration de la solution de copolymère étant de 60 g/l, la pellicule produite a une épaisseur de 70 μm.

On presse une trame tissée, en monobrins de polypropylène, entre deux pellicules de 70 μm sous une pression de 0,7 MPa (7 kg/cm$^2$) et à une température de 126°C.

Cette pellicule renforcée est traitée par l'acide chlorosulfonique selon la technique décrite dans l'exemple 1. Le temps de réaction étant de 90 minutes, le rendement de sulfonation mesuré est alors de 97 %.

La membrane ainsi produite a des propriétés mécaniques nettement améliorées par rapport à la membrane de l'exemple 1, une capacité d'échange de 3,4 meq/g, une résistivité de 28 $\Omega$.cm, une teneur en eau de 96 % et une faible perméabilité à l'hydrogène et à l'oxygène.

Lors de son emploi dans un module d'électrolyse, les électrodes étant en platine, sous un courant de 2000 A/m², les gaz produits contiennent moins de 0,5 % d'impuretés.

Après plus de 3500 heures d'utilisation, son fonctionnement est inaltére.

Comme il va de soi et comme il résulte d'ailleurs déjà de ce qui précède, l'invention ne se limite nullement à ceux de ses modes d'application et de réalisation qui ont été plus particulièrement envisagés; elle en embrasse au contraire, toutes les variantes.

## Revendications

1. Procédé de fabrication d'une membrane échangeuse de cations, comportant une première étape consistant à préparer une poudre de copolymère greffé en greffant des monomères éthyléniquement insaturés sur une poudre de polymère, une deuxième étape consistant à mettre la poudre de copolymère greffé sous la forme d'une pellicule mince et une troisième étape consistant à fixer des groupes échangeurs de cations sur la pellicule de copolymère greffé ainsi obtenue, caractérisé en ce que, dans la première étape, on réalise le greffage de façon à obtenir un taux de greffage des monomères sur le polymère de 15 à 60 % et en ce que, dans la deuxième étape, on met la poudre de copolymère greffé sous la forme d'une pellicule mince en mettant en solution dans un solvant organique la poudre de copolymère greffé, en coulant sur un support la solution ainsi obtenue et en évaporant ensuite le solvant.

2. Procédé selon la revendication 1, caractérisé en ce que l'on prépare la poudre de copolymère greffé en soumettant à une irradiation au moyen de rayonnements ionisants une suspension de ladite poudre de polymère dans une solution desdits monomères.

3. Procédé selon l'une quelconque des revendications 1 et 2, caractérisé par le fait que la granulométrie de la poudre de polymère mise en oeuvre dans la première étape est inférieure à 100 μm, et de préférence comprise entre 5 et 50 μm.

4. Procédé selon l'une quelconque des revendications 1 et 2, caractérisé par le fait que la poudre de polymère mise en oeuvre dans la première étape a une granulométrie comprise entre 10 et 20 μm.

5. Procédé selon l'une quelconque des revendications 1 à 4, caractérisé en ce que dans la deuxième étape on renforce la pellicule mince de copolymère greffé en incluant une trame dans cette pellicule mince.

6. Procédé selon l'une quelconque des revendications 1 à 5, caractérisé en ce que la poudre de polymère est une poudre de polyéthylène et les monomères sont du styrène et/ou un ou plusieurs de ses dérivés.

7. Procédé selon la revendication 6, caractérisé par le fait que le greffage du styrene et/ou de ses dérivés sur le polyéthylène est réalisé sous rayonnement ionisant, la dose d'irradiation étant de 1000 à 5000 Gy.

8. Procédé selon l'une quelconque des revendications 6 et 7, caractérisé par le fait que dans la deuxième étape on dissout la poudre de polyéthylène greffé dans un solvant constitué par de la décalide ou un de ses dérivés, du xylène ou un chloronaphtalène.

9. Procédé selon l'une quelconque des revendications 1 à 8, caractérisé par le fait que dans la troisième étape on fixe des groupes -SO$_3$H échangeurs de cations sur la pellicule de copolymère greffé en immergeant la pellicule dans un bain d'acide chlorosulfonique, d'acide sulfurique concentré ou d'oléum.

10. Membrane échanqeuse de cations obtenue par le procédé selon l'une quelconque des revendications 1 à 9, comprenant une pellicule de copolymère greffé sur lequel sont fixés des groupes échangeurs de cations, caractérisée par le fait que:
- sa capacité d'échange est supérieure à 0,5 meq/g, de préférence supérieure à 1,75 meq/g,
- sa résistivité est inférieure à 100 $\Omega$.cm, de préférence inférieure à 70 $\Omega$.cm, et
- son gonflement dans l'eau est supérieur à 30 %, de preférence supérieur à 60 % par rapport à la masse sèche.

11. Membrane selon la revendication 10, caractérisée par le fait que:
- sa capacité d'échange est comprise entre 1,75 et 4 meq/g,
- sa résistivité est comprise entre 70 et 20 $\Omega$.cm, et
- son gonflement dans l'eau est compris entre 60 et 100 % par rapport à la masse sèche.

12. Membrane selon l'une quelconque des revendications 10 et 11, caractérisée par le fait que son épaisseur est comprise entre 30 et 150 μm.

13. Membrane selon l'une quelconque des revendications 10 à 12, caractérisée en ce que le copolymère greffé comprend:
- 13 à 37,5 % en poids de motifs provenant d'un ou plusieurs monomères choisis dans le groupe comprenant le styrène, 1'α-méthylstyrène, 1'α-bromostyrène, 1'α-chloros-styrène, le chlorométhylstyrène, le bromométhylstyrène et le divinylbenzène; et
- de 62,5 à 87 % en poids de polyéthylène.

14. Application de la membrane selon l'une quelconque des revendications 10 à 13 en tant qu'électrolyte solide pour la production d'hydrogène ayant une pureté supérieure à 98 % par électrolyse de l'eau.

**Patentansprüche**

1. Verfahren zur Herstellung einer Kationenaustauschmembran, das umfaßt eine erste Stufe, die darin besteht, daß ein Pfropfcopolymerpulver hergestellt wird durch Aufpfropfen von ethylenisch ungesättigten Monomeren auf ein Polymerpulver, eine zweite Stufe, die darin besteht, daß das Pfropfcopolymerpulver in eine dünne Folie überführt wird, und eine dritte Stufe, die darin besteht, daß Kationenaustauschergruppen an der auf diese Weise erhaltenen Pfropfcopolymerfolie fixiert werden, dadurch gekennzeichnet, daß in der ersten Stufe die Aufpfropfung in der Weise durchgeführt wird, daß man einen Aufpfropfungsgrad der Monomeren auf das Polymere von 15 bis 60% erhält und daß in der zweiten Stufe das Pfropfcopolymerpulver in eine dünne Folie überführt wird, indem man das Pfropfcopolymerpulver in einem organischen Lösungsmittel löst, die so erhaltene Lösung auf einen Träger gießt und das Lösungsmittel anschließend verdampft.

2. Verfahren nach Anspruch 1, dadurch gekennzeichnet, daß man das Pfropfcopolymerpulver herstellt, indem man eine Suspension des Polymerpulvers in einer Lösung der Monomeren einer Bestrahlung mit ionisierender Strahlung aussetzt.

3. Verfahren nach einem der Ansprüche 1 und 2, dadurch gekennzeichnet, daß die Korngröße des in der ersten Stufe eingesetzten polymerpulvers unter 100 μm und vorzugsweise zwischen 5 und 50 μm liegt.

4. Verfahren nach einem der Ansprüche 1 und 2, dadurch gekennzeichnet, daß das in der ersten Stufe eingesetzte Polymerpulver eine Korngröße zwischen 10 und 20 μm hat.

5. Verfahren nach einem der Ansprüche 1 bis 4, dadurch gekennzeichnet, daß man in der zweiten Stufe die dünne pfropfcopolymerfolie verstärkt durch Einarbeitung eines Schußfadens in diese dünne Folie.

6. Verfahren nach einem der Ansprüche 1 bis 5, dadurch gekennzeichnet, daß das polymerpulver ein polyethylenpulver ist und daß die Monomeren Styrol und/oder eines oder mehr seiner Derivate sind.

7. Verfahren nach Anspruch 6, dadurch gekennzeichnet, daß die Aufpfropfung des Styrols und/oder seiner Derivate auf das polyethylen unter ionisierender Bestrahlung erfolgt, wobei die Bestrahlungsdosis 1000 bis 5000 Gy beträgt.

8. Verfahren nach einem der Ansprüche 6 und 7, dadurch gekennzeichnet, daß man in der zweiten Stufe das gepfropfte polyethylenpulver in einem Lösungsmittel löst,das besteht aus Decalin oder einem seiner Derivate, Mylol oder einem Chloronaphthalin.

9. Verfahren nach einem der Ansprüche 1 bis 8, dadurch gekennzeichnet, daß man in der dritten Stufe $SO_3$ H-Kationenaustauschergruppen an der Pfropfcopolymerfolie fixiert, indem man die Folie in ein Bad von Chlorsulfonsäure, konzentrierter Schwefelsäure oder Oleum eintaucht.

10. Kationenaustauschmembran, wie sie nach dem Verfahren nach einem der Ansprüche 1 bis 9 erhalten wird, die umfaßt eine Pfropfcopolymerfolie, auf der Kationenaustauschergruppen fixiert sind, dadurch gekennzeichnet, daß:
- ihre Austauschkapazität oberhalb 0,5 meq/g, vorzugsweise oberhalb 1,75 meq/g, liegt,
- ihr spezifischer Widerstand unterhalb 100 Ω.cm, vorzugsweise unterhalb 70 Ω.cm, liegt und
- ihre Quellung in Wasser über 30%, vorzugsweise über 60% liegt, bezogen auf die trockene Masse.

11. Membran nach Anspruch 10, dadurch gekennzeichnet, daß:
- ihre Austauschkapazität zwischen 1,75 und 4 meq/g liegt,
- ihr spezifischer Widerstand zwischen 70 und 20 Ω.cm liegt und
- ihre Quellung in Wasser zwischen 60 und 100%, bezogen auf die trockene Masse, liegt.

12. Membran nach einem der Ansprüche 10 und 11, dadurch gekennzeichnet, daß ihre Dicke zwischen 30 und 150 μm liegt.

13. Membran nach einem der Ansprüche 10 bis 12, dadurch gekennzeichnet, daß das Pfropfcopolymere umfaßt:
- 13 bis 37,5 Gew.-%-Einheiten, die von einem oder mehreren Monomeren stammen, die ausgewählt werden aus der Gruppe, die umfaßt Styrol, α-Methylstyrol, α-Bromstyrol, α-Chlorstyrol, Chlormethylstyrol, Brommethylstyrol und Divinylbenzol; und
- 62,5 bis 87 Gew.-% Polyethylen.

14. Verwendung der Membran nach einem der Ansprüche 10 bis 13 als fester Elektrolyt für die Herstellung von Wasserstoff mit einer Reinheit von mehr als 98% durch Elektrolyse von Wasser.

**Claims:**

1. Process for the production of a cation exchange membrane, having a first stage consisting of preparing a graft copolymer powder by grafting ethylenically unsaturated monomers on a polymer powder, a second stage consisting in forming the powder of graft copolymer into a thin film, and a third stage consisting of fixing cation exchange groups on the graft copolymer film thereby obtained, characterized in that, in the first stage, grafting is carried out whereby to obtain a loading of 15 to 60% of monomers on the polymer, and in that, in the second stage, the graft copolymer powder is cast into the thin film by dissolving the graft copolymer powder in an organic solvent, pouring the solution thereby obtained onto a support, and evaporating the solvent.

2. Process according to claim 1, characterized in that the graft copolymer powder is prepared by subjecting a suspension of said polymer powder in a solution of said monomers to ionising radiation.

3. Process according to either of claims 1 and 2, characterized in that the particle size of the polymer powder employed in the first stage is less than 100 μm, and preferably comprised between 5 and 50 μm.

4. Process according to either of claims 1 and 2, characterized in that the polymer powder employed in the first stage has a particle size between 10 and 20 μm.

5. Process according to any one of claims 1 to 4, characterized in that the thin film of graft copolymer is reinforced in the second stage by including a web within said thin film.

6. Process according to any one of claims 1 to 5, characterized in that the polymer powder is a polyethylene powder, and the monomers are styrene and/or one or more of its derivatives.

7. Process according to claim 6, characterized in that the grafting of the styrene and/or of its derivatives on the polyethylene is produced by ionising radiation, the radiation dose being from 100 to 5000 Gy.

8. Process according to either of claims 6 and 7, characterized in that, during the second stage, the powder of grafted polyethylene is dissolved in a solvent comprising decalin or one of its derivatives, xylene or a chloronaphthalene.

9. Process according to any one of claims 1 to 8, characterized in that, during the third stage, the cation exchange groups-$SO_3H$ are fixed on the film of graft copolymer by immersing the film in a bath of chlorosulfonic acid, concentrated sulfuric acid, or oleum.

10. Cation exchange membrane obtained by a process according to any one of claims 1 to g, comprising a film of graft copolymer on which cation exchange groups are fixed, characterized in that:
- Its exchange capacity is greater than 0.5 meq/g, preferably greater than 1.75 meq/g,
Its resistivity is lower than 100 Ω.cm, preferably lower than 70 Ω.cm, and it swells in water to an extent greater than 30%, preferably greater than 60%, with respect to the dry mass.

11. Membrane according to claim 10, characterized in that:
- Its exchange capacity, is between 1.75 and 4 meq/g,
- Its resistivity is between 70 and 20 Ω.cm, and it swells in water to an extent between 60 and 100%, with respect to the dry mass.

12. Membrane according to either of claims 10 and 11, characterized in that it has a thickness between 30 and 150 μ m.

13. Membrane according to any one of claims 10 to 12, characterized in that the graft copolymer comprises:
- 13 to 37.5 % by weight of units provided by one or more monomers selected from the group comprising styrene, alpha-methylstyrene, alpha-bromostyrene, alpha chlorostyrene, chloromethylstyrene bromomethylstyrene and divinylbenzene; and
- from 62.5 to 87% by weight of polyethylene.

14. Application of a membrane according to any one of claims 10 to 13 as a solid electrolyte for the production of hydrogen having a purity greater than 98% by electrolysis of water.